Europäisches Patentamt

**European Patent Office**

**Office européen des brevets**

(11) Numéro de publication: **0 378 945**
**A1**

# (12) DEMANDE DE BREVET EUROPEEN

(21) Numéro de dépôt: **89403578.1**

(22) Date de dépôt: **20.12.89**

(51) Int. Cl.5: **G07C 5/10, B60R 25/00**

(30) Priorité: **20.12.88 FR 8816798**

(43) Date de publication de la demande:
**25.07.90 Bulletin 90/30**

(84) Etats contractants désignés:
**DE ES FR GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Barbier, Daniel**
**Gallion sur Montcient 5, rue des Bouts de la Ville**
**F-78250 Meulan(FR)**
Inventeur: **Monty, Alexander**
**20, rue du Commandant Jacquot**
**F-92500 Rueil-Malmaison(FR)**

(74) Mandataire: **Saint Martin, René et al**
**Régie Nationale des Usines Renault 8 & 10, avenue Emile Zola**
**F-92109 Boulogne Billancourt(FR)**

(54) **Système de support de données pour véhicule.**

(57) Système de support de données pour véhicules comportant un ensemble électronique embarqué sur le véhicule et un élément portatif à mémoire caractérisé par le fait que ledit élément portatif à mémoire est constitué par la clé de contact (1) du véhicule et coopère avec un appareil de lecture ou enregistrement (3) situé en dehors du véhicule et permettant l'échange de données avec la mémoire de la clé.

Fig 2

## SYSTEME DE SUPPORT DE DONNEES POUR VEHICULE

La présente invention se rapporte à un système de support de données pour véhicules comportant un ensemble électronique et un élément portatif à mémoire s'enfichant dans un appareil de lecture ou enregistrement de manière à échanger des données avec ledit ensemble électronique.

On connaît par le brevet français 2.604.128 un système du type précédent.

On connaît par le brevet américain 4.297.562 une clé électronique pourvue d'une mémoire et de contacts assurant l'interface.

La présente invention a pour but de fournir un système de support de données pour un usage embarqué et un usage après-vente utilisant la clé de contact du véhicule comme élément enfichable de stockage en mémoire et de restitution d'informations. La mémoire de la clé sera une aide au pré-diagnostic en atelier.

Cet élément portatif enfichable sera avantageusement constitué par une clé de contact de véhicule automobile dont la tête comporte une mémoire électronique de stockage d'informations reliée à des contacts de captage et de lecture activés lors de la mise en place de la clé dans un appareil de lecture ou d'enregistrement situé en dehors du véhicule de manière à permettre l'échange de données avec la mémoire de la clé.

Selon une caractéristique, l'appareil de lecture ou enregistrement comporte une fiche de contact dans laquelle s'engage la clé pour établir une liaison électrique entre la clé et des circuits électroniques reliés par une liaison avec l'ordinateur.

Conformément à l'invention, la clé de contact du véhicule comporte une partie crantée pour l'antivol de direction et des moyens pour échanger des données avec l'appareil de lecture ou enregistrement.

Selon une caractéristique, l'appareil de lecture ou enregistrement est constitué par l'antivol embarqué du véhicule.

Selon une caractéristique, l'appareil de lecture ou enregistrement est en dehors du véhicule, à poste fixe et est connecté à un ordinateur de lecture des données enregistrées dans la mémoire de la clé.

L'invention va maintenant être décrite avec plus de détails en se référant à un mode de réalisation donné à titre d'exemple et représenté par les dessins annexés.

La figure 1 est une vue de la clé et de l'antivol embarqué sur véhicule.

La figure 2 est une vue de la clé et de l'appareil de lecture-enregistrement non embarqué qui lui est associé.

La figure 3 est un schéma de l'appareil de lecture-enregistrement.

En se référant aux dessins le système comporte une clé de contact 1 coopérant avec un antivol embarqué 2 relié à l'ensemble électronique du véhicule.

La clé de contact 1 se compose du pène 11 et de la tête 12. A l'intérieur de la tête 12 en matière synthétique se loge une mémoire électronique miniaturisée 15. Elle est enfermée de manière hermétique dans la tête.

Le pène 11 se compose, vers l'extrémité libre d'un tronçon cranté 13 classique et du côté de la tête d'un tronçon de connexion 14 pourvu de contacts électriques 141 et permettant d'échanger des données, d'une part entre la mémoire et l'antivol 2, et d'autre part entre la mémoire et les ordinateurs de gestion des données.

La mémoire 15 permet la transmission des données sériellement afin de réduire le nombre de contacts pour des raisons de fiabilité mécanique.

Les contacts électriques 141 sont réalisés en un matériau approprié pour garantir la durée de vie nécessaire (par exemple, alliage de nickel) et sont reliés à la mémoire 15 par un petit circuit imprimé 16.

La clé coopère avec un lecteur-enregistreur 2 embarqué ou fixe.

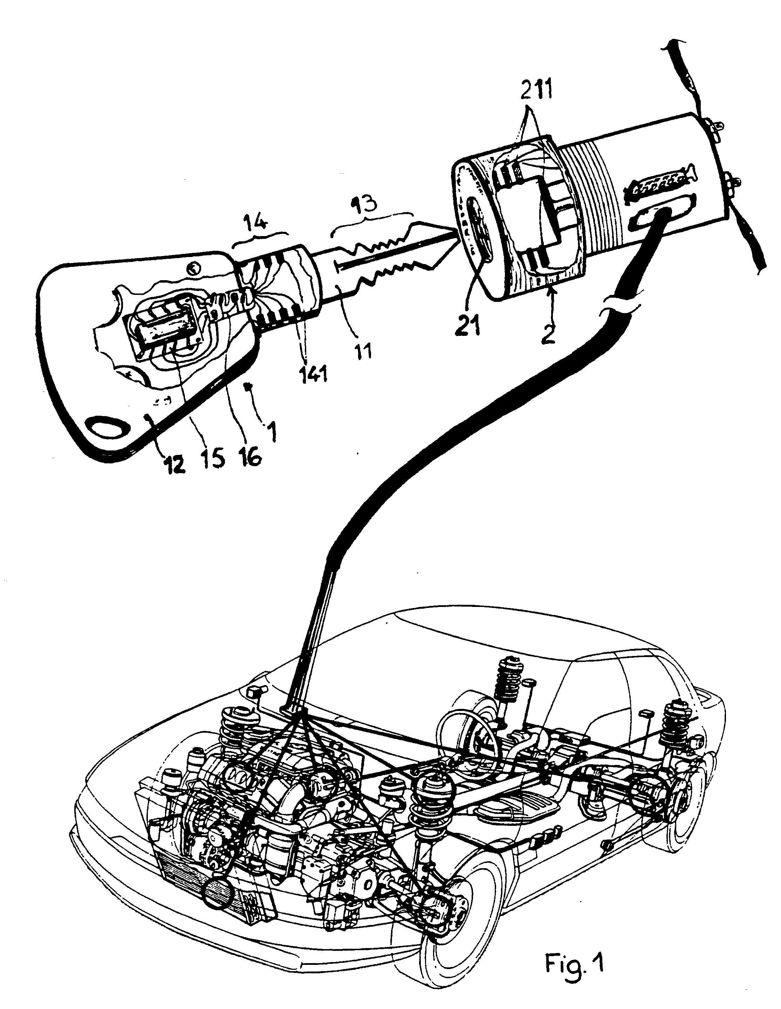

La clé coopère avec un lecteur-enregistreur constitué par l'antivol (figure 1). Le lecteur se présente sous la forme d'un bloc pourvu d'un logement de connexion 21 recevant le tronçon de connexion et prolongé du logement recevant le tronçon cranté. Le logement de connexion 21 présente des contacts électriques 211 venant en contact avec les contacts électriques 141. Les contacts électriques 211 sont reliés au bus reliant divers peints du véhicule et le micro-ordinateur de bord.

A l'introduction de la clé de contact dans l'antivol, la rotation de la clé assure, d'une part le déverrouillage de la colonne de direction et le démarrage, et d'autre part la connexion de la mémoire auxiliaire 15 et du micro-ordinateur embarqué. La mémoire de la clé peut alors recevoir des informations des capteurs de véhicule.

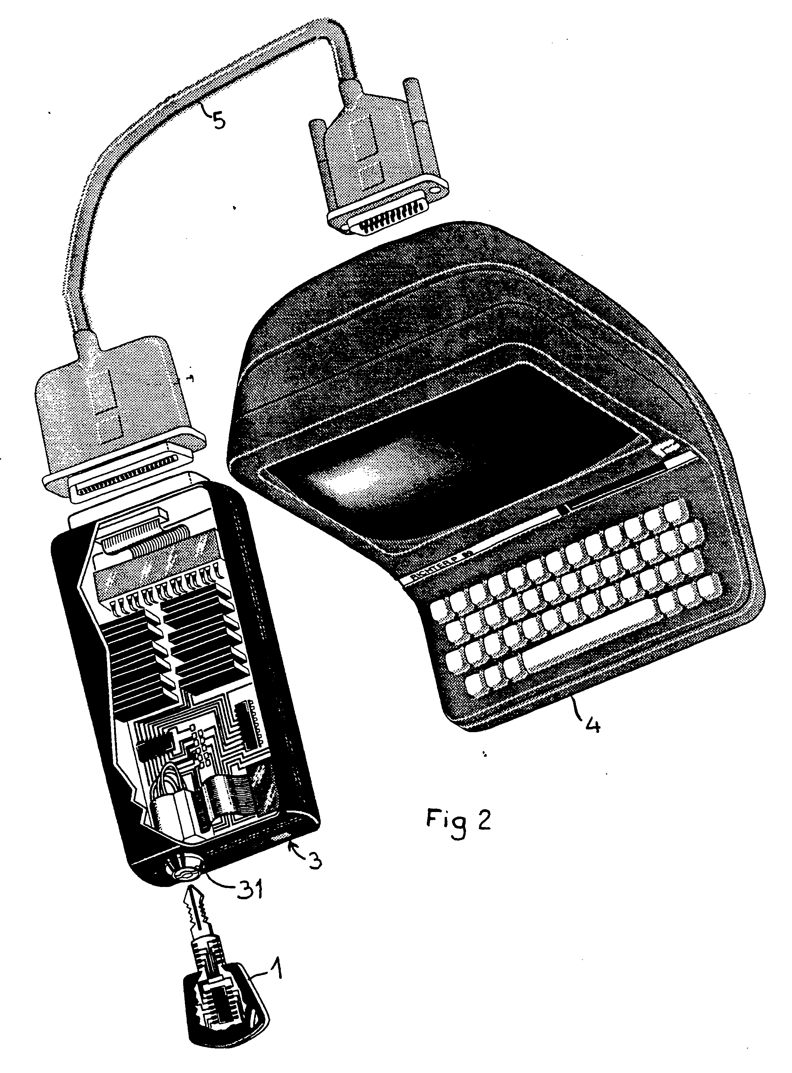

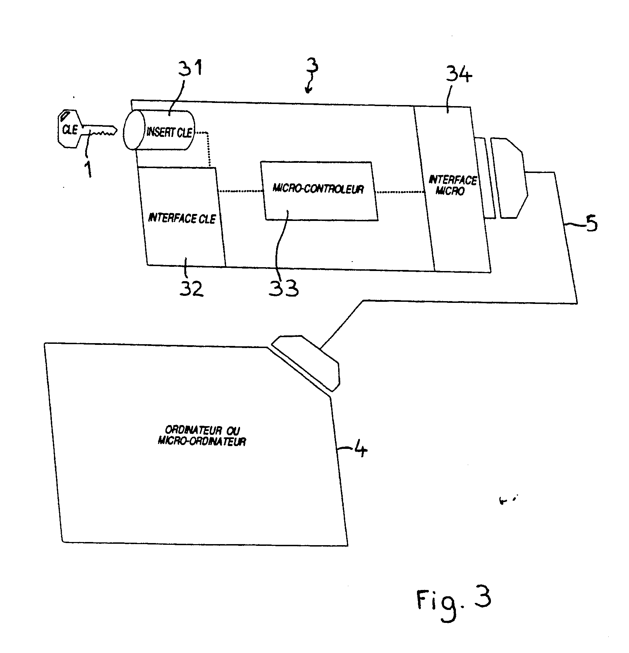

La clé coopère par ailleurs avec un lecteur-enregistreur 3 autonome ou non embarqué situé à un point fixe, garage par exemple (figures 2 et 3). Cet appareil 3 est connecté à un micro-ordinateur 4 dont le microprocesseur est accompagné d'une mémoire suffisante pour lire le contenu d'une clé en quelques secondes.

L'appareil 3 lit ou écrit dans la clé, sait communiquer dans les deux sens avec l'ordinateur 4 et son comportement est commandé par l'ordinateur sur la base d'instructions.

Parmi les données susceptibles d'être lues ou enregistrées, on peut citer les données concernant tout ou partie des exemples suivants :

- Identification du client
- Identification du véhicule
- Renseignements sur les contrats d'entretien ou de garantie relatifs au client et/ou au véhicule.
- Identification de certaines pièces de rechange et organes du véhicule.
- Identification de pièces pouvant fait l'objet d'un suivi par le constructeur.
- Identification de numéro de clé, code d'antivol ou d'autres informations concernant le véhicule et étant sous forme cryptée.
- Renseignements sur les interventions et réparations qui ont été effectuées sur le véhicule.
- Toute information permettant d'améliorer l'accueil commercial vis-à-vis du client.
- Toute information permettant au constructeur un meilleur suivi de sa production.
- Toute autre information liée au client ou au véhicule ainsi qu'à l'usage qui en est fait.

L'appareil de lecture et/ou enregistrement 3 comporte une fiche de contact 31 pourvue d'une alvéole dans laquelle s'engage la clé en établissant la liaison électrique entre la mémoire et l'appareil. Celui-ci comprend un sous-ensemble 32 dit "interface clé" permettant l'ajustement des signaux électriques entre le sous-ensemble "micro-contrôleur" 32 et la clé à mémoire engagée dans la fiche 31.

Le sous-ensemble 33 dit "micro-contrôleur" assure la mémorisation temporaire ainsi que la mise en forme des données lues ou à écrire sur la clé 1. Le sous-ensemble "interface ordinateur" 34 permet l'ajustement électrique et logique des signaux entre le sous-ensemble 33 "micro-contrôleur" et un quelconque ordinateur 4, notamment via une liaison 5 standardisée pouvant répondre par exemple à la norme RS232 ou à toute autre norme.

Cette utilisation de l'invention inclut l'écriture sur la clé des données propres à la fabrication en usine.

Il est entendu que l'on peut, sans sortir du cadre de l'invention, imaginer des variantes et des perfectionnement de détails et de même envisager l'emploi de moyens équivalents. Les échanges de données, au lieu d'être assurés par des contacts, pourraient être assurés par un émetteur-récepteur à infrarouge.

## Revendications

1°) Système de support de données pour véhicules comportant un ensemble électronique et un élément portatif à mémoire caractérisé par le fait que ledit élément portatif à mémoire est constitué par la clé de contact (1) du véhicule et coopère avec un appareil de lecture ou enregistrement (3) situé en dehors du véhicule et permettant l'échange de données avec la mémoire de la clé.

2°) Système selon la revendication 1, caractérisé par le fait que l'appareil de lecture ou enregistrement (3) est connecté à un ordinateur (4) de lecture des données enregistrées dans la mémoire de la clé.

3°) Système selon l'une quelconque des revendications précédentes caractérisé en ce que sa tête de la clé comporte une mémoire électronique de stockage d'informations reliée à des contacts de captage et de lecture activés lors de la mise en place de la clé sur le véhicule pour le captage ou dans l'appareil de lecture enregistrement situé en dehors du véhicule.

4°) Système selon la revendication 3, caractérisé en ce que les opérations d'échange de données sont assurées par un émetteur=récepteur à infrarouge disposé de façon connue en soi dans la tête de la clé.

5°) Système selon l'une quelconque des revendications précédentes, caractérisé par le fait que l'appareil de lecture ou enregistrement (3) comporte une fiche de contact (31) dans laquelle s'engage la clé pour établir une liaison électrique entre la clé et des circuits électroniques (32, 33, 34) reliés par une liaison (5) avec l'ordinateur (4).

6°) Système selon la revendication 5, caractérisé par le fait que l'appareil comprend un circuit d'interface (32), un micro-contrôleur (33) et un circuit d'interface micro (34).

Fig. 1

Fig 2

CLE

INSERT CLE

INTERFACE CLE

MICRO-CONTROLEUR

INTERFACE MICRO

ORDINATEUR OU MICRO-ORDINATEUR

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2503425 (BARBIER) <br> * pages 1 - 3; figures * | 1, 3, 4 | G07C5/10 <br> B60R25/00 |
| Y |  | 2, 5, 6 |  |
|  | --- |  |  |
| Y | EP-A-239066 (COMPAGNIE GENERALE D,AUTOMATISMES CGA-HBS) <br> * le document en entier * | 2, 5, 6 |  |
|  | --- |  |  |
| A | FR-A-2451848 (DAIMLER-BENZ) <br> * le document en entier * | 1 |  |
|  | --- |  |  |
| A | GB-A-2133547 (BL SYSTEMS LTD) <br> * page 1, ligne 97 - page 2, ligne 3; figure * | 1, 2 |  |
|  | --- |  |  |
| A | EP-A-71523 (SOURIAU & CIE) <br> * page 6, ligne 13 - page 7, ligne 18; figure 1 * <br> * page 13, ligne 27 - page 14, ligne 4 * | 1 |  |
|  | --- |  |  |
| P,X | DE-A-3729941 (DOPP) <br> * colonne 10, ligne 58 - colonne 11, ligne 42; revendications 1, 34, 39; figure 8 * | 1 | DOMAINES TECHNIQUES RECHERCHES (Int. Cl.5) <br><br> B60R <br> G07C <br> E05B |
|  | ----- |  |  |

Le présent rapport a été établi pour toutes les revendications

| Lieu de la recherche | Date d'achèvement de la recherche | Examinateur |
|---|---|---|
| LA HAYE | 10 AVRIL 1990 | DUBOIS B.F.J. |